# EUROPÄISCHE PATENTSCHRIFT

(11) **EP 0 917 667 B1**
(45) Veröffentlichungstag und Bekanntmachung des Hinweises auf die Patenterteilung: **10.07.2002**
(21) Anmeldenummer: 97936599.6
(22) Anmeldetag: 06.08.1997
(51) Int. Cl.: G02F 1/15, G02F 1/153, G02F 1/155

(54) **ELEKTROCHROMES VERGLASUNGSELEMENT**
ELECTROCHROMIC GLAZING ELEMENT
ELEMENT DE VITRAGE ELECTROCHROMIQUE

(30) Priorität: 06.08.1996 DE 19631420
(43) Veröffentlichungstag der Anmeldung: 26.05.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: WITTWER, Volker, D-79112 Freiburg (DE); GEORG, Andreas, D-79111 Freiburg (DE); GRAF, Wolfgang, D-79427 Eschbach (DE)
(74) Vertreter: Münich, Wilhelm, Dr.
(86) Internationale Anmeldenummer: DE9701651
(87) Internationale Veröffentlichungsnummer: WO9806000

(56) Entgegenhaltungen:
- EP-A- 0 035 766
- WO-A-91/14197
- DE-A- 4 440 572
- US-A- 3 840 288

## Beschreibung

### Technisches Gebiet

Die Erfindung bezieht sich auf ein Verglasungselement für Gebäudefassadenverkleidung oder Fenstersysteme, insbesondere für Fahrzeuge, Züge oder Flugzeuge. Das Verglasungselement weist zwei Scheiben auf, die einen Zwischenraum einschließen. Auf wenigstens einer, dem Zwischenraum zugewandten Scheibenoberfläche ist ein Beschichtungsaufbau vorgesehen, der eine auf einer Scheibenoberfläche aufgebrachte elektrisch leitende, eine darauf aufgebrachte elektrochrome, eine darauf aufgebrachte ionenleitende sowie eine darauf aufgebrachte elektrokatalytische Schicht aufweist.

### Stand der Technik

In vielen Bereichen, wie beispielsweise bei Gebäuden, Kraftfahrzeugen, Flugzeugen oder Zügen ist ein optisch schaltbares Verglasungselement, das die Sonneneinstrah lung zu regulieren vermag, wünschenswert. Optisch schaltbare Spiegel, schaltbare optische Bauelemente oder großflächige Display's sind weitere Beispiele für den Einsatz optisch schaltbarer Verglasungselemente.

Ein bekannter Aufbau eines optisch schaltbaren Bauelementes besteht aus einer transparenten Elektrode, einer elektrochromen Schicht, einem lonenleiter, einer Gegenelektrode sowie einer weiteren transparenten Elektrodenschicht. Ein derartiger Aufbau findet sich beispielsweise in dem Artikel von S. K. Deb in Solar Energy Materials and Solar Cells, 1992.

Um die optische Transparenz derartiger elektrochromer Bauelemente zu verbessern, sind Vorschläge gemacht worden, die Gegenelektrodenschicht durch optische Ma terialien wie beispielsweise Wasser zu ersetzen. So ist seit den 70er Jahren ein Aufbau unter dem Namen "Deb-Zelle" bekannt, bei dem die Gegenelektrode dadurch eingespart wird, indem Wasser, das sich innerhalb der ionenleitenden Schicht befindet, durch die daran angelegte Spannung gespalten wird und mit den so gebildeten H⁺-lonen die elektrochrome Schicht eingefärbt wird. Siehe hierzu die Artikel von S. K. Deb in Proc. 24th electronic Components Conf. (IEEE Washington 1974, S. 11-14) sowie von C. B. Thomas, P Lloyd, Microelectronics Vol. 7(3), S.29-43 (1976).

Der in den vorstehend genannten Artikeln beschriebene Schichtaufbau besteht aus einer transparenten Elektrodenschicht, einer elektrochromen Schicht, einer wasserhaltigen lonenleiterschicht und wie meistens bei derartigen Systemen einer dünne Goldschicht. Das durch die Elektrolysewirkung aufgespaltene Wasser wird über die Goldschicht aus der Luft nachgeliefert. Der Wassergehalt innerhalb der ionenleitenden Schicht und die zur Aufspaltung des Wassers notwendigen, hohen elektrischen Spannungen führen jedoch zu einer geringen Stabilität des gesamten elektrochromen Elementes und beschränken sehr stark seine Lebensdauer. So besteht beispielsweise die Gefahr von chemischen Reaktionen innerhalb der Schichten, die den Schichtverbund zerstören können. Desweiteren ist das Schaltverhalten der bekannten elektrochromen Elemente stark von der Luftfeuchtigkeit abhängig.

Eine weitere elektrochromatische Anordnung geht aus der DE 24 36 174 A1 hervor und beschreibt eine Schichtanordnung, die insbesondere für Festkörper-Anzeigen dienen soll. Diese Schichtanordnung besteht aus einer transparenten Elektrode, die auf einem durchsichtigen Substrat aufgebracht ist. Auf der Elektrodenschicht ist eine elektrochrome Schicht aufgebracht, über der eine ionendurchlässige Isolatorschicht vorgesehen ist. Eine auf der ionendurchlässigen Isolatorschicht aufgebrachte elektrokatalytische Schicht bildet die Gegenelektrode zur transparenten Elektrodenschicht. Eine auf der elektrokatalytischen Schicht vorgesehene Schwammstruktur dient als Reservoir-Schicht für Atome und/oder Mole küle, die durch die vorherrschenden Potentialverhältnisse elektrolytisch dissoziiert werden, wobei die elektrisch geladenen Ionen je nach Potentialverhältnisse durch die ionendurchlässige Isolatorschicht indie elektrochrome Schicht hineinwandern bzw. aus ihr herausgetrieben werden. Auch in dieser Druckschrift wird vorgeschlagen, in der Schwammstruktur im wesentlichen Wasser einzubringen, das nach elektrolytischer Zersetzung H⁺-lonen liefert. Somit sind zu dieser Vorrichtung all jene Nachteile zu nennen, die vorstehend bereits in Verbindung mit der "Deb-Zelle" diskutiert worden sind.

Schließlich ist in der US 5 136 419 ein elektrochromes Bauelement beschrieben, das einen Zwischenraum aufweist, in dem ein Gasgemisch bestehend aus Inertgasen und einem Dampf mit hoher Dielektrizitätskonstante, wie beispielsweise ein Gemisch aus Stickstoff und Wasserdampf vorgesehen ist. Dies geht insbesondere aus Spalte 1, Zeilen 65 bis 68, sowie Spalte 4, Zeilen 13 bis 15 hervor. Innerhalb eines elektrischen Feldes wird das hochdielektrische Material, vorzugsweise Wasser ionisiert. Auch in diesem Fall ist das bekannte Bauelement mit all den vorstehend diskutierten Nachteilen verbunden, die auch einer "Deb- Zelle" anhaften.

Ebenso eine Art verbesserte Deb-Zelle ist der US 4 505 538 zu entnehmen, die einen gasgefüllten Zwischenraum vorsieht. Aus der Spalte 5, Zeilen 28 und 29 der Druckschrift geht hervor, daß der gasbefüllte Zwischenraum genügend viel Feuchtigkeit aufweisen muß, so daß durch die Feuchtigkeit ausreichend viel Protonen zur Verfügung gestellt werden können. Aus diesem Hinweis sowie auch aus den in der Druckschrift aufgelisteten Beispielen geht hervor, daß eine Art verbesserte "Deb-Zelle" beschrieben wird, die Wasser durch Anlegen einer Spannung spaltet und die sich bildenden Protonen in die elektrochrome Schicht injiziert.

### Beschreibung der Erfindung

Aufgabe der Erfindung ist ein Verglasungselement für Gebäudefassadenverkleidung oder Fenstersysteme, insbesondere für Fahrzeuge, Züge oder Flugzeuge, mit wenigstens zwei Scheiben, die einen Zwischenraum einschließen und auf wenigstens einer, dem Zwischenraum zugewandten Scheibenoberfläche einen Beschichtungsaufbau vorsieht, der eine auf einer Scheibenoberfläche aufgebrachte, elektrisch leitende, eine darauf aufgebrachte elektrochrome, eine darauf aufgebrachte ionenleitende sowie eine darauf aufgebrachte elektrokatalytische Schicht aufweist, derart weiterzubilden, so daß die mit der Verwendung von Wasser verbundenen Nachteile vermeidbar sind. Insbesondere sollten hohe Regelspannungen zum Ein- bzw. Entfärben der elektrochromen Schicht vermieden werden, wie sie beispielsweise für die Elektrolyse von Wasser in die Bestandteile erforderlich sind. Das Verglasungselement sollte möglichst optisch transparent ausgebildet sein, d.h. keine die optischen Transmissionseigenschaften nachträglich beeinflussenden Einzelschichten aufweisen.

Die Lösung der der Erfindung zugrunde liegende Aufgabe ist im Anspruch 1 angegeben. Den Erfindungsgedanken vorteilhaft ausbildende weitere Merkmale sind Gegenstand der Unteransprüche.

Erfindungsgemäß ist ein Verglasungselement für Gebäudefassadenverkleidung oder Fenstersysteme, insbesondere für Fahrzeuge, Züge oder Flugzeuge gemäß dem Oberbegriff des Anspruchs 1 derart ausgestaltet, daß neben dem Beschichtungsaufbau in dem Zwischenraum, der wasserfrei ist, ausschließlich ein reduzierendes oder oxidierendes Gas oder ein Gasgemisch bestehend aus einem reduzierendem oder oxidierendem Gas sowie einem inerten Gas vorgesehen ist, und daß eine elektrische Spannung von kleiner 1,2 Volt zwischen der elektrisch leitenden und der elektrokatalytischen Schicht angelegt ist.

Der Erfindung liegt die Idee zugrunde, auf jegliche Zwischenschichten zu verzichten, die die optischen Transmissionseigenschaften des erfindungsgemäßen Verglasungselementes beeinträchtigen. Anstatt der in der DE 24 36 174 A1 beschriebenen Schwammstruktur sieht die Erfindung ausschließlich eine Gasatmosphäre vor, die vorzugsweise aus einem Gemisch aus einem reduzierendem Gas, wie beispielsweise Wasserstoffgas und einem inerten Gas, wie beispielsweise Argon oder Stickstoff besteht. Ein wesentlicher Gesichtspunkt der Erfindung besteht darin, daß das elektrochrome Verglasungselement ohne die Verwendung von Wasser arbeitet. Es konnte gezeigt werden, daß das erfindungsgemäße System bei Spannungen deutlich unter der Spaltspannung von Wasser (1,2 V) arbeiten kann.Auf diese Weise kann das Element bei niedrigeren Betriebsspannungen betrieben werden, so daß die Lebensdauer des Verglasungselements erheblich gesteigert werden kann.

Das erfindungsgemäße Verglasungselement weist zwei Scheiben auf, die aus Glas oder Kunststoff gefertigt sein können. Auf wenigstens einer Scheibenoberfläche, die in den Zwischenraum der beiden sich gegenüberstehenden Scheiben orientiert ist, wird eine transparente, elektrisch leitende Schicht aufgebracht, auf die wiederum elektrochromes Material, wie beispielsweise Wolframdioxid, Molydänoxid, Titanoxid, Vanadiumoxid, Chromoxid, Ceroxid, Nioboxid, Yttriumoxid oder Viologene abgeschieden ist. Auf der elektrochromen Materialschicht wird desweiteren ein lonenleiter aufgebracht, der beispielsweise aus Aluminiumoxid, Siliziumoxid, Tantaloxid oder einem Polymer besteht. Schließlich ist auf der ionenleitenden Schicht eine elektrokatalytische Schicht abgeschieden, auf der gegebenenfalls eine weitere Gridstruktur aufbringbar ist, die aus einem elektrisch leitendem Material besteht und transparente und wasserstoffpermeable Eigenschaften aufweist. Die Gridschicht wird insbesondere dann auf die elektrokatalytische Schicht aufgebracht, sofern bei großflächigen Systemen die elektrische Leitung der elektrokatalytischen Schicht zugering dimensioniert ist. Alternativ kann z.B. auch über bzw. unter der Katalysatorschicht eine elektrischleitende, transparente H₂ bzw. H leitende Schicht aufgebracht werden.

Wie bereits erwähnt befindet sich über diesem Schichtaufbau eine Gasatmosphäre aus einem Gemisch aus einem reduzierendem Gas, wie beispielsweise Wasserstoffgas und einem inerten Gas, wie beispielsweise Argon oder Stickstoff. Geringe Beimischungen von Sauerstoffgas, wie sie mit der Zeit durch kleine Lecks auftreten könnten, stören die Funktion des Elementes nicht wesentlich. Sollte nach einer längeren Zeit zuviel Wasserstoffgas entwichen oder zuviel Sauerstoffgas in den Zwischenraum zwischen den beiden Scheiben eindiffundiert sein, so ist ein Austausch der Gasatmosphäre möglich. Besonders zu beachten, daß die Konzentration des Wasserstoffgases deutlich unterhalb der Explosionsgrenze von Wasserstoff gehalten werden kann.

Eine weitere Variante ist die Verwendung oxidierender Gase bzw. Gasgemische, wie z.B. Luft, bei anodisch statt kathodisch elektrochromen Materialien wie z.B.NiOₓ statt WO₃.

Die Funktionsweise des erfindungsgemäßen Verglasungselementes soll nachstehend beschrieben werden:

Bei dem zwischen den Glasscheiben eingebrachten Gasgemisch werden die H₂-Moleküle an der elektrokatalytischen Schicht absorbiert und an dieser Schicht katalytisch dissoziiert und ionisiert. Ebenfalls können durch Lecks in den Zwischenraum eingedrungene Sauerstoff-Moleküle durch die katalytische Wirkung dissoziiert und ionisiert werden. Wird eine Spannung an der elektrisch leitenden Schicht, die unmittelbar auf der Scheibenoberfläche aufgebracht worden ist, angelegt, so daß diese Schicht zur Kathode wird, so zieht das damit verbundene elektrische Feld H⁺-lonen durch den lonenleiter in die Wolframoxidschicht. Aufgrund der entgegengesetzten Polarität der O²⁻-lonen gelangen diese nicht in die Schichtenfolge, in die die H⁺-lonen aufgrund der Potentialverhältnisse wandern. Zur gleichen Zeit wandern Elektronen von der transparenten ausgebildeten elektrisch leitenden Schicht in die elektrochrome Schicht und färben diese ein. Die Ladungsneutralität der elektrochromen Schicht bleibt durch das gleichzeitige Einwandern von H⁺-lonen und Elektronen gewährleistet.

Bei Abklemmen der Spannung bleibt das elektrische Feld aufgrund des durch die Einfärbung geänderten elektrochemischen Potentials der elektrochromen Schicht erhalten und ebenso die Einfärbung.

Wird hingegen die elektrisch leitende Schicht zur Anode, so werden die HH+H-lonen und die Elektronen wieder aus der elektrochromen Schicht abgezogen und es kommt zur Entfärbung.

Somit kann durch Anlegen einer Spannung zwischen der elektrisch leitenden, transparenten Schicht auf der Scheibe und der elektrokatalytischen Schicht die elektrochrome Schicht eingefärbt und bei Umpolen der Spannung wieder entfärbt werden. Je nach Einwirkungsdauer der angelegten Spannung ist die Ein- oder Entfärbung stufenlos regulierbar. Bei Abklemmen der Spannung bleibt wie obenstehend erwähnt der Färbezustand erhalten.

### Kurze Beschreibung der Zeichnungen

Die Erfindung wird nachstehend anhand eines Ausführungsbeispieles unter Bezugnahme auf die Zeichnungen exemplarisch beschrieben. Es zeigen:
- Fig. 1: schematisierter Schichtaufbau eines erfindungsgemäßen Ausführungsbeispiels,
Fig. 2a,b Diagrammdarstellung der Transmission des Verglasungselementes bei unterschiedlichen Potentialverhältnissen.

### Beschreibung von Ausführungsbeispielen

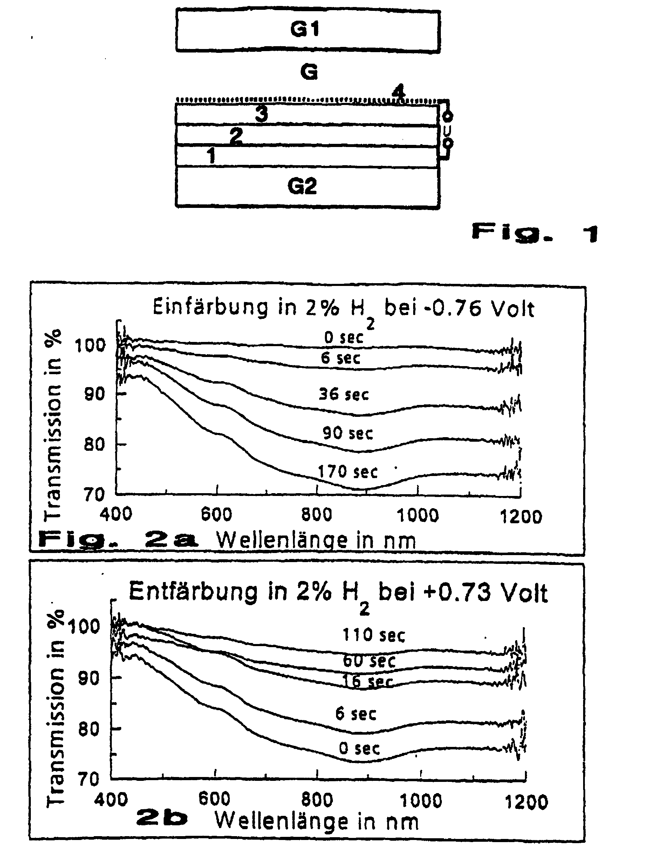

Das in Figur 1 dargestellte Verglasungselement weist zwei sich gegenüberliegende Glasscheiben G1 und G2 auf. Auf der unteren Glasscheibe G1 ist ein Schichtaufbau vorgesehen, der folgende Einzelschichten aufweist: eine elektrisch leitende, insbesondere optisch transparente Schicht 1, die als Elektrode dient; eine elektrochrome Schicht 2, die vorzugsweise aus Wolframoxid besteht; eine ionenleitende Schicht 3 auf der eine elektrokatalytische Schicht 4 aufgebracht ist. Die elektrokatalytische Schicht 4 dient als Gegenelektrode zur elektrisch leitenden Schicht 1. Zwischen der elektrokatalytischen Schicht 4 und der Glasscheibe G1 ist ein Gasgemisch G eingebracht, das vorzugsweise Wasserstoffgas enthält, so daß sich H₂-Moleküle durch Absorption an der elektrokatalytischen Schicht 4 bilden. Aufgrund der an der Elektrodenschicht 1 und 4 vorherrschenden Potentiale dissoziieren und ionisieren die Bestandteile des Wasserstoffgases und wandern im Falle eines negativen Potentials an der Elektrodenschicht 1 in die elektrochrome Schicht 2 hinein. Eine simultane folgende Elektronenwanderung von der Kathode 1 in die elektrochrome Schicht 2 verursachen die Einfärbung dieser Schicht und tragen gleichzeitig in Verbindung mit den vorhandenen H⁺-lonen zur Ladungsneutralität in dieser Schicht bei.

Dieser Einfärbevorgang kann durch Potentialwechsel an der elektrisch leitenden Schicht 1 umgekehrt werden.

Aus den Figuren 2a und 2b geht die Transmission in Prozent durch ein erfindungsgemäßes Verglasungselement gemäß Figur 1 bei der Einfärbung (siehe Figur 2a) und bei der Entfärbung (siehe hierzu Figur 2b) hervor. Als elektrochromes Material wurde Wolframoxid, als lonenleiter Tantaloxid und als Katalysatorschicht Platin aufgedampft. Die gemessenen und dargestellten 100 Prozent Transmissionswerte beziehen sich auf den ungefärbten Zustand. Aus dem Diagramm gemäß Figur 2a ist das zeitliche Einfärbungsverhalten eines Verglasungselementes entnehmbar, an dessen elektrisch leitende Schicht 1 eine Spannung von -0,76 Volt angelegt ist. Die Gasatmosphäre weist hierbei einen zweiprozentigen Wasserstoffgas-Anteil auf. Die untereinander dargestellten Transmissionskurven, die die Transmissionswerte in einem Wellenlängenbereich zwischen 400 und 1200 nm angeben, sind zeitlich nacheinander ermittelt worden. Die oberste Transmissionslinie erfolgt zum Zeitpunkt 0, an dem kein Potentialgefälle zwischen den Elektrodenschichten 1 und 4 vorherrschte. Anhand der untereinander dargestellten Transmissionskurven, die nach 6, 36, 90 und 170 Sekunden nach Anlegen des negativen Potentials an die Elektrode 1 erfaßt worden sind, kann der zeitliche Verlauf der spektralen Einfärbung des Verglasungselementes entnommen werden. Entsprechen des gilt für die Figur 2b, an der der Entfärbungsprozeß in unterschiedlichen Zeitintervallen nach Anlegen einer positiven Spannung an der Elektrodenschicht 1 entnommen werden kann.

Der Schichtaufbau des Verglasungselementes kann mit unterschiedlichen Beschichtungsmethoden, wie beispielsweise Sputtern, CVD oder Sol-Gel-Verfahren hergestellt werden. Ebenso eignen sich DC-Magnetron gesputterte Wolframoxidschichten.

Grundsätzlich ist das Verglasungselement auch als schaltbarer Spiegel weiterzubilden, dessen Schichtaufbau insofern abzuändern ist, daß auf dem Substrat bzw. auf einer Scheibe, die nicht mehr transparent ausgebildet sein muß, eine elektrisch leitende Schicht, die reflektierend ist, aufgebracht wird. Falls die Scheibe bereits selbst elektrisch leitend und spiegelnd ausgebildet ist, kann diese Schicht wegfallen. Zur Reflexionsverminderung beim vorstehend genannten Schichtaufbau ist eine negative Spannung an die elektrisch leitende Schicht, die vorzugsweise unterhalb der elektrochromen Schicht angeordnet ist, anzulegen.

## Patentansprüche

1. Verglasungselement für Gebäudefassadenverkleidung oder Fenstersysteme, insbesondere für Fahrzeuge, Züge oder Flugzeuge, mit wenigsten zwei Scheiben, die einen Zwischenraum einschließen und auf wenigstens einer, dem Zwischenraum zugewandten Scheibenoberfläche ein Beschichtungsaufbau vorsieht, der eine auf einer Scheibenoberfläche aufgebrachte elektrisch leitende, eine darauf aufgebrachte elektrochrome, eine darauf aufgebrachte ionenleitende sowie eine darauf aufgebrachte elektrokatalytische Schicht aufweist, wobei diese Schichten so gewählt werden, daß sie die optischen Transmissionseigenschaften nicht beeinträchtigen, so daß das Verglastungselement möglichst optisch transparent ausgebildet ist,
**dadurch gekennzeichnet, daß** neben dem Beschichtungsaufbau in dem Zwischenraum, der wasserfrei ist, ausschließlich ein reduzierendes oder oxidierendes Gas oder ein Gasgemisch bestehend aus einem reduzierendem oder oxidierendem Gas sowie einem inerten Gas vorgesehen ist, und
daß eine Spannungsquelle vorgesehen ist, die eine elektrische Spannung deutlich unter der Spaltspannung von Wasser von 1.2 Volt zwischen der elektrisch leitenden und der elektrokatalytischen Schicht anlegt.

2. Verglasungselement nach Anspruch 1
**dadurch gekennzeichnet, daß** auf der elektrokatalytischen Schicht eine elektrisch leitende Grid-Struktur oder ein elektrisch leitendes, transparentes,
wasserstoffdurchlässiges Material aufgebracht ist.

3. Verglasungselement nach Anspruch 1 oder 2,
**dadurch gekennzeichnet, daß** zwischen der auf der Scheibenoberfläche aufgebrachten elektrisch leitenden Schicht und der elektrokatalytischen Schicht die elektrische Spannung varibel ist.

4. Verglasungselement nach einem der Ansprüche 1 bis 3,
**dadurch gekennzeichnet, daß** an der elektrokatalytischen Schicht reduzierende Gasbestandteile adsorbieren und dissoziieren,

5. Verglasungselement nach einem der Ansprüche 1 bis 4,
**dadurch gekennzeichnet, daß** die elektrochrome Schicht Wolframoxid, Molybdänoxid, Titanoxid, Vandiumoxid, Chromoxid, Ceroxid, Nickeloxid, Nioboxid, Yttriumoxid, Viologene und/oder Polyanilin aufweist.

6. Verglasungselement nach einem der Ansprüche 1 bis 5,
**dadurch gekennzeichnet, daß** die ionenleitende Schicht Tantaloxid, Aluminiumoxid, Siliziumoxid, Polymerelektrolyte und/oder ionenleitende Folien aufweist.

7. Verglasungselement nach einem der Ansprüche 1 bis 6,
**dadurch gekennzeichnet, daß** die ionenleitende Schicht elektrisch schlecht leitendes Wolframoxid, Molybdänoxid, Titanoxid, Vanadiumoxid, oder Ceroxid aufweist.

8. Verglasungselement nach einem der Ansprüche 1 bis 7,
**dadurch gekennzeichnet, daß** die elektrokatalytische Schicht weitgehend optisch transparentes Material ist und Platin, Rhodium, Palladium, Gold und/oder Nickel aufweist.

9. Verglasungselement nach einem der Ansprüche 1 bis 8,
**dadurch gekennzeichnet, daß** die elektrochrome Schicht eine Schichtdicke zwischen 100 nm und 1000 nm aufweist.

10. Verglasungselement nach einem der Ansprüche 1 bis 9,
**dadurch gekennzeichnet, daß** das Gas oder Gasgemisch innerhalb des Zwischenraumes austauschbar ist.

11. Verglasungselement nach einem der Ansprüche 1 bis 10,
**dadurch gekennzeichnet, daß** zur Transmissionserhöhung der elektrochromen Schicht eine positive Spannung an die elektrisch leitende Schicht, die unmittelbar auf der Scheibenoberfläche aufgebracht ist, anlegbar ist.

12. Verglasungselement nach einem der Ansprüche 1 bis 11,
**dadurch gekennzeichnet, daß** eine low-e-Schicht zur Verringerung des k-Wertes mit einer im Infrarotbereich reflektierenden und einem im sichtbaren Bereich durch lässigen dünnen Schicht vorgesehen ist.

13. Verglasungselement nach Anspruch 12,
**dadurch gekennzeichnet, daß** die low-e-Schicht eine Silber- oder Halbleiterschicht ist.

14. Verglasungselement nach einem der Ansprüche 1 bis 13,
**dadurch gekennzeichnet, daß** die Scheiben aus Glas und/oder aus einem Polymersubstrat und/oder einem metallischem Substrat bestehen.

## Claims

1. Glazing element for curtain walls of buildings or window systems, particularly for vehicles, trains or aeroplanes, comprising at least two panes enclosing a gap therebetween and providing, on at least one pane surface, which faces the gap, a coating structure that includes an electrically conductive layer applied on the pane surface, an electro-chromic ion-conducting layer as well as an electro-catalytic layer applied thereon, with these layers being selected in such a way that they will not impair the optical transmittance properties so that the glazing element will be designed for a maximum of optical transparency,
**characterised in that**, apart from the coating structure in said gap, which is water-free, a reducing or oxidising gas or a gas mixture is provided exclusively, which gas mixture consists of a reducing or oxidising gas as well as an inert gas,
and that a voltage source is provided that applies an electrical voltage substantially below the dissociation voltage of water of 1.2 Volt between said electrically conducting layer and said electro-catalytic layer.

2. Glazing element according to Claim 1,
**characterised in that** an electrically conductive grid structure or an electrically conductive transparent layer permeable to hydrogen is applied on said electro-catalytic layer.

3. Glazing element according to Claim 1 or 2,
**characterised in that** said electrical voltage is variable, which is applied between said electrically conductive layer applied on the pane surface and said electro-catalytic layer.

4. Glazing element according to any of the Claims 1 to 3,
**characterised in that** reducing gas constituents adsorb and dissociate on said electro-catalytic layer.

5. Glazing element according to any of the Claims 1 to 4,
**characterised in that** said electro-chromic layer contains tungsten oxide, molybdenum oxide, titanium oxide, vanadium oxide, chromium oxide, cerium oxide, nickel oxide, niobium oxide, yttrium oxide, viologene and/or poly aniline.

6. Glazing element according to any of the Claims 1 to 5,
**characterised in that** said ion-conducting layer contains tantalum oxide, aluminium oxide, silicon oxide, polymer electrolyte and/or ion-conducting sheets.

7. Glazing element according to any of the Claims 1 to 6,
**characterised in that** said ion-conducting layer contains electrically poorly conducting tungsten oxide, molybdenum oxide, titanium oxide, vanadium oxide or cerium oxide.

8. Glazing element according to any of the Claims 1 to 7,
**characterised in that** said electro-catalytic layer is a largely optically transparent material and contains platinum, rhodium, palladium, gold and/or nickel.

9. Glazing element according to any of the Claims 1 to 8,
**characterised in that** said electro-chromic layer has a thickness of layer between 100 nm and 1000 nm.

10. Glazing element according to any of the Claims 1 to 9,
**characterised in that** said gas or gas mixture is exchangeable inside said gap.

11. Glazing element according to any of the Claims 1 to 10,
**characterised in that** for an increase of the transmittance of said electro-chromic layer, a positive voltage may be applied to said electrically conducting layer that is applied directly on the pane surface.

12. Glazing element according to any of the Claims 1 to 11,
**characterised in that** a low-e layer is provided for a reduction of the k-value with a thin layer reflecting in the infrared range and transparent in the visible range.

13. Glazing element according to Claim 12,
**characterised in that** said low-e layer is a silver or semiconductor layer.

14. Glazing element according to any of the Claims 1 to 13,
**characterised in that** said panes consist of glass and/or a polymer substrate and/or a metallic substrate.

## Revendications

1. Élément de vitrage pour bardages de bâtiments ou systèmes de fenêtres, en particulier pour véhicules, trains ou aéroplanes, comprenant au moins deux vitres renfermant une cavité y entre, et présentant, sur au moins une surface de vitre, qui est tournée vers ladite cavité, une structure de revêtement, qui comprend une couche électroconductrice appliquée sur la surface de vitre, une couche électrochrome conductrice d'ions ainsi qu'une couche électrocatalytique y appliquée, ces couches étant choisies de façon, qu'elle ne soient pas nuisible aux propriétés de transmittance optique, d'une manière, que l'élément de vitrage soit conçu pour un maximum de transparence optique, **caractérisé en ce qu'**au plus de la structure de revêtement dans ladite cavité, qui est sans eau, un gaz ou un mélange gazeux réduisant ou oxydant est intégré exclusivement, ce mélange gazeux consistant en un gaz réduisant ou oxydant ainsi qu'en un gaz inerte,
et **en ce qu'**une source de tension est disposée, qui applique une tension électrique essentiellement plus basse que la tension de la dissociation de l'eau de 1,2 Volt entre ladite couche électroconductrice et ladite couche électrocatalytique.

2. Élément de vitrage selon la revendication 1,
**caractérisé en ce qu'**une structure de grille à conduction électrique ou une couche transparente à conduction électrique, perméable pour l'hydrogène, est appliquée sur ladite couche électrocatalytique.

3. Élément de vitrage selon la revendication 1 ou 2,
**caractérisé en ce que** ladite tension électrique est variable, qui est appliquée entre ladite couche électroconductrice déposée sur la surface de vitre et ladite couche électrocatalytique.

4. Élément de vitrage selon une quelconque des revendications 1 à 3,
**caractérisé en ce que** des constituants du gaz réduisant adsorbent et dissocient sur ladite couche électrocatalytique.

5. Élément de vitrage selon une quelconque des revendications 1 à 4,
**caractérisé en ce que** ladite couche électrochrome contient de l'oxyde de tungstène, l'oxyde de molybdène, l'oxyde de titane, l'oxyde de vanadium, l'oxyde de chrome, l'oxyde de cérium, l'oxyde de nickel, l'oxyde de niobium, l'oxyde d'yttrium, du viologène et/ou du poly aniline.

6. Élément de vitrage selon une quelconque des revendications 1 à 5,
**caractérisé en ce que** ladite couche conductrice d'ions contient de l'oxyde de tantale, l'oxyde d'aluminium, l'oxyde de silicium, d'un électrolyte polymérique et/ou des feuilles conductrices d'ions.

7. Élément de vitrage selon une quelconque des revendications 1 à 6,
**caractérisé en ce que** ladite couche conductrice d'ions contient de l'oxyde tungstène à très faible conduction électrique, de l'oxyde de molybdène, l'oxyde de titane, l'oxyde de vanadium ou de l'oxyde de cérium.

8. Élément de vitrage selon une quelconque des revendications 1 à 7,
**caractérisé en ce que** ladite couche électrocatalytique est un matériau largement à transparence optique et contient du platine, du rhodium, du palladium, de l'or et/ou de nickel.

9. Élément de vitrage selon une quelconque des revendications 1 à 8,
**caractérisé en ce que** ladite couche électrochrome a une épaisseur de couche entre 100 nm et 1000 nm.

10. Élément de vitrage selon une quelconque des revendications 1 à 9,
**caractérisé en ce que** ledit gaz ou mélange gazeux est échangeable à l'intérieur de ladite cavité.

11. Élément de vitrage selon une quelconque des revendications 1 à 10,
**caractérisé en ce que** pour une augmentation de la transmittance de ladite couche électrochrome, on peut appliquer une tension positive à ladite couche électroconductrice, qui est déposée directement sur la surface de vitre.

12. Élément de vitrage selon une quelconque des revendications 1 à 11,
**caractérisé en ce qu'**une couche à bas niveau e est disposée pour une réduction de la valeur k moyennant une mince couche réfléchissante dans la gamme infrarouge et transparente dans la gamme visible.

13. Élément de vitrage selon la revendication 12,
**caractérisé en ce que** ladite couche à bas niveau e est une couche en argent ou une couche semi-conductrice.

14. Élément de vitrage selon une quelconque des revendications 1 à 13,
**caractérisé en ce que** lesdites vitres consistent en verre et/ou en un substrat polymérique et/ou en un substrat métallique.
